(19) Europäisches Patentamt
European Patent Office
Office européen des brevets

(11) **EP 1 755 069 A1**

(12) **EUROPEAN PATENT APPLICATION**
published in accordance with Art. 158(3) EPC

(43) Date of publication:
**21.02.2007 Bulletin 2007/08**

(51) Int Cl.:
*G06K 19/077* (2006.01)   *B42D 15/10* (2006.01)
*G06K 19/07* (2006.01)   *H01Q 7/02* (2006.01)

(21) Application number: 05720740.9

(22) Date of filing: **14.03.2005**

(86) International application number:
**PCT/JP2005/004472**

(87) International publication number:
**WO 2005/088531 (22.09.2005 Gazette 2005/38)**

(84) Designated Contracting States:
**DE FI FR GB IT**

(30) Priority:  **16.03.2004   JP   2004075123**

(71) Applicant: **OMRON CORPORATION**
**Kyoto-shi,  Kyoto 600-8530 (JP)**

(72) Inventor: **KAWAI, Wakahiro**
**Omron Corp.**
**801,Minamifudodo-cho**
**Shimoyo-ku,Kyoto-shi**
**Kyoto 600-8530 (JP)**

(74) Representative: **Calderbank, Thomas Roger et al**
**MEWBURN ELLIS**
**York House**
**23 Kingsway**
**London WC2B 6HP (GB)**

(54) **THIN IC TAG AND METHOD OF PRODUCING THE SAME**

(57)     An electronic part holding film (30) includes an electronic part module (32) and winding conductor patterns (34a, 34b). The winding conductor patterns (34a, 34b) have ends in which terminal pads (35, 36) are formed and to which a connecting part (37) is not connected, respectively. The terminal pads (35, 36) are electrically connected to each other via the electronic part module (32). The electronic part holding film (30) is folded at a folding position (38). In this way, a thin IC tag (20) is manufactured. According to the thin IC tag (20), it is possible to provide a thin IC tag which does not increase the number of manufacturing steps and the manufacturing cost and on which an electronic part and the like can be mounted with ease.

FIG. 1 (a)

FIG. 1 (b)

## Description

TECHNICAL FIELD

The present invention relates to a flexible thin IC tag suitable for use, for example, in an IC label which can be provided in a slip and which can be read in a noncontact manner by using an induction field. Particularly, the present invention relates to (i) a thin IC tag for producing a small-size IC label and (ii) a method for manufacturing the thin IC tag. (Hereinafter, the IC label which can be provided in the slip is referred to as "slip-embedded type IC label".)

BACKGROUND ART

For the purpose of promoting automation of distribution, it is important that a slip or the like attached to an individual article or the like can be read by machine. Conventionally, for this purpose, a bar code label representing the slip has been attached to the slip.

However, in cases where the bar code label is read by using a so-called bar code reader, the bar code label and the bar code reader need to be highly precisely correlated with each other in terms of a distance and a direction. This has been an impediment to facilitation of distribution. Furthermore, a bar code can store only a small amount of information, so that there is not much to be managed by using the bar code in the distribution.

In view of this, a slip-embedded type IC label that can be read in a noncontact manner by using an induction field has been used recently. The slip-embedded type IC label is read by using the induction field, and can be therefore read out comparatively free from the distance and direction restrictions. Specifically, the slip-embedded type IC label is free from the restrictions in terms of the reading direction, so that the information stored in the IC label can be reliably read even 1 meter away from the IC label.

Further, the IC label has an IC capable of storing identification information of a management target article. In some applications, such a function of storing the identification information can be used to store security information for identifying the article.

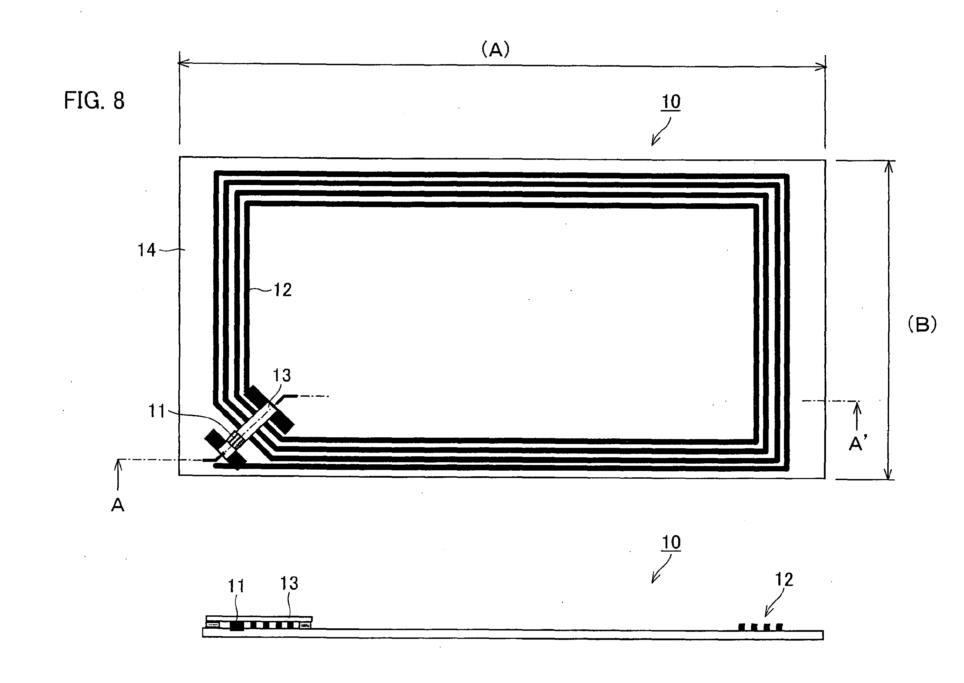

Incidentally, a thin IC tag applicable to an IC label or the like normally uses a frequency of 13.56 MHz widely used for noncontact communication. Fig. 8 shows one example of the thin IC tag using the frequency band. As shown in Fig. 8, such a thin IC tag 10 includes: (i) an IC chip 11, which has a memory function and a capacitor; and (ii) an antenna coil 12. The thin IC tag 10 has a resonant frequency f calculated in accordance with the following formula (1) for a resonant circuit:

$$f = 1/\left(2\pi\sqrt{L \times C}\right) \qquad (1)$$

where C indicates the capacitance of the capacitor in the IC chip 11, and L indicates the inductance of the antenna coil 12.

As shown in the formula (1), the resonant frequency f decreases in reverse proportion to the capacitance C of the capacitor and to the inductance L.

On the other hand, the inductance L of the antenna coil 12 is set in accordance with following formula (2):

$$L = R1 \times A \times T^2 \qquad (2)$$

where A is a coefficient that increases in direct proportion to R2/R1, R1 indicates the outer dimension of the antenna coil 12, R2 indicates the inner dimension of the antenna coil 12, and T is the number of turns (windings) in the antenna coil 12.

As shown in formula (2), the inductance L of the antenna coil 12 increases in direct proportion to the outer dimension R1 of the antenna coil 12, to the inner dimension R2 of the antenna coil 12, and to the number of turns T in the antenna coil 12. Note that the coefficient A is an experimental value. Therefore, in cases where the capacitance C of the capacitor in the IC chip 11 is set in advance, the resonant frequency f needs to be adjusted by changing the outer dimension R1 of the antenna coil 12, the inner dimension R2 of the antenna coil 12, and the number of turns T in the antenna coil 12.

However, in cases where the capacitance C of the capacitor in the IC chip 11 is set in advance, there is a limit in simply changing the outer dimension R1 of the antenna coil 12, the inner dimension R2 of the antenna coil 12, and the number of turns T in the antenna coil 12 so that the frequency of 13.56 MHz used for the noncontact communication is obtained. Therefore, there is a limitation in downsizing of the thin IC tag 10.

In order to solve the problem, for example, Patent Document 1 (Japanese Unexamined Patent Publication No. 200231/1998 (Tokukaihei 10-200231; published on July 31, 1998)) discloses an electronic part holding film having two surfaces on which antenna coils are respectively formed. The electronic part holding film is manufactured by using a method for manufacturing a double-sided circuit substrate. Further, Patent Document 2 (Japanese Unexamined Patent Publication No. 134459/1999 (Tokukaihei 11-134459; published on May 21, 1999)) proposes a method for folding a single-sided circuit substrate on which two antenna coils are formed, so as to manufacture a thin IC tag having two surfaces on which the antenna coils are respectively formed.

DISCLOSURE OF INVENTION

However, since the electronic part holding film described in Patent Document 1 employs the double-sided circuit substrate, a through-hole or the like for electrically connecting circuits respectively formed on the both sides of the substrate needs to be provided in the electronic part holding film. This raises such a problem that the number of manufacturing steps and the cost of manufacturing are increased.

Further, in the thin IC tag described in Patent Document 2, a window hole or a notch for exposing a connection terminal for mounting an electronic part on the substrate needs to be provided. This causes increase of the number of steps and the cost in manufacturing the thin IC tag. Moreover, the electronic part and the like are mounted on the thin IC tag described in Patent Document 2, after the folding process . This raises such a problem that mass productivity is reduced.

For this reason, there has been a strong demand for development of: (i) a thin IC tag which does not increase the number of manufacturing steps and manufacturing cost and on which an electronic part and the like can be mounted with ease; and (ii) a method for manufacturing the thin IC tag.

The present invention has been made in view of the foregoing problems. It is an object of the present invention to provide: (i) a flexible thin IC tag which is suitable for use in, for example, a slip-embedded type IC label that can be read in a noncontact manner by using an induction field, and which does not increase the number of manufacturing steps and the manufacturing cost, and on which an electronic part and the like can be mounted with ease; and (ii) a method for manufacturing the thin IC tag.

In order to solve the foregoing problem, a thin IC tag according to the present invention includes: a product obtained by (i) forming an electronic part holding film by mounting an electronic part on a flexible sheet on which an antenna coil is formed, and then (ii) folding the electronic part holding film in one direction such that the electronic part holding film is divided into sections having substantially an identical size, the electronic part being provided on a circuit board, being provided in the electronic part holding film as an electronic part module, the sections of the electronic part holding film respectively having winding conductor patterns each formed on at least one surface of each of the sections such that respective centers of the winding conductor patterns match each other when the electronic part holding film is folded, the winding conductor patterns respectively formed on the sections constituting the antenna coil in which the winding conductor patterns are serially connected to each other via a predetermined connecting part so that a current flows in one winding direction when the electronic part holding film is folded, the winding conductor patterns provided in the sections having ends in which terminal pads are formed and to which the predetermined connecting part is not connected, respectively, the terminal pads of the winding conductor patterns whose centers match each other when the electronic part holding film is folded being electrically connected to each other via the electronic part module. Note that the "folding" includes various modes of folding such as (i) Z folding (i.e., zigzag folding), (ii) spiral folding by which windings are made in one direction, and (iii) a combination thereof.

According to the foregoing arrangement, it is possible to increase the number of turns in the antenna coil. Therefore, a predetermined resonant frequency can be obtained even when the outer dimensions of the antenna coil are reduced. This makes it possible to improve sensitivity in the noncontact reading using an electromagnetic wave (induction field). Furthermore, the two terminal pads respectively formed on the both ends of the antenna coil are connected to each other via the electronic part module. This makes it unnecessary to provide a through-hole, a window hole, or the like, and therefore makes it possible to reduce the number of manufacturing steps and the manufacturing cost. Further, the electronic part module on which the electronic part such as an IC ship is mounted can be mounted before the folding process. This allows improvement in the mass production of the thin IC tag.

Further, in order to solve the foregoing problems, a method according to the present invention for manufacturing a thin IC tag includes: a first step of forming an electronic part holding film by providing, on (i) a flexible sheet on which an antenna coil is formed, (ii) an electronic part module in which an electronic part is mounted on a circuit board; a second step of forming an adhesion layer on at least one surface of the electronic part holding film; and a third step of folding the electronic part holding film on which the adhesion layer has been formed in the second step.

According to the foregoing method, the thin IC tag having the foregoing arrangement can be manufactured, but the number of manufacturing steps and the manufacturing cost are not increased. Further, the electronic part and the like are mounted easily.

Further, in order to solve the foregoing problems, a method according to the present invention for manufacturing a thin IC tag includes: a first step of forming an electronic part holding film by providing, on (i) a flexible sheet on which an antenna coil is formed, (ii) an electronic part module in which an electronic part is mounted on a circuit board; a second step of bonding the electronic part module to the flexible sheet on which the antenna coil is formed; a third step of forming an adhesion layer on at least one surface of the electronic part holding film; and a fourth step of folding the electronic part holding film on which the adhesion layer has been formed in the third step.

In the manufacture of the thin IC tag, the electronic part module may be deformed in the step of folding the electronic part holding film. Therefore, the step of folding the electronic part holding film may not be carried out satisfactorily. However, according to the foregoing method, the electronic part module is bonded to the flexible sheet, so that the electronic part holding film can be prevented from being deformed. Therefore, the step of folding the electronic part holding film can be carried out satisfactorily.

Additional objects, features, and strengths of the present invention will be made clear by the description below. Further, the advantages of the present invention will be evident from the following explanation in reference to the drawings.

BRIEF DESCRIPTION OF DRAWINGS

Fig. 1(a) is an overhead plan view of a thin IC tag according to the present embodiment.

Fig. 1(b) is a cross-sectional view of the thin IC tag of Fig. 1(a) taken along the line A-A'.

Fig. 2(a) is an overhead plan view of an electronic part holding film according the present embodiment.

Fig. 2(b) is a cross-sectional view of the electronic part holding film of Fig. 2(a) taken along the line A-A'.

Fig. 3(a) is a diagram showing Step A of producing an electronic part module according to the present embodiment.

Fig. 3(b) is a diagram showing Step B of producing a flexible sheet on which an antenna coil is formed.

Fig. 3(c) is a diagram illustrating that the electronic part module of Fig 3(a) is mounted on the flexible sheet.

Fig. 4(a) is a diagram showing Step D of manufacturing the thin IC tag according to the present embodiment.

Fig. 4(b) is a diagram showing Step E of manufacturing the thin IC tag.

Fig. 5(a) is a diagram showing Step F of manufacturing another thin IC tag according to the present embodiment.

Fig. 5(b) is a diagram showing Step G of manufacturing the thin IC tag.

Fig. 6 is a diagram schematically showing an apparatus for continuously carrying out Steps D and E of a method according to the present embodiment for manufacturing the thin IC tag.

Fig. 7 is a diagram schematically showing a problem caused by another method according to the present embodiment for manufacturing the thin IC tag.

Fig. 8 is a diagram schematically showing a structure of a conventional thin IC tag.

BEST MODE FOR CARRYING OUT THE INVENTION

[Embodiment 1]

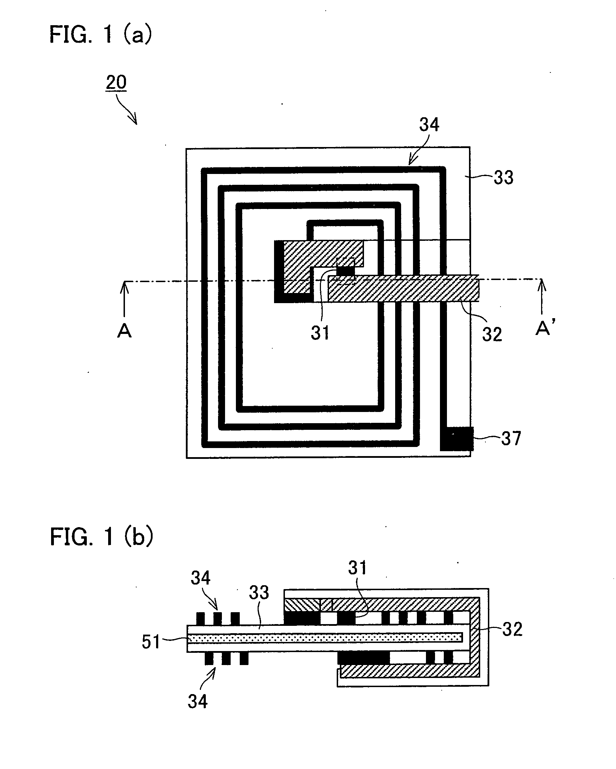

One embodiment of the present invention will be described below with reference to Figs. 1(a) through 4(b) and Fig. 6.

Figs. 1(a) and 1(b) show a thin IC tag according to one embodiment of the present invention. Fig. 1(a) is an overhead plan view of the thin IC tag according to the present embodiment, and Fig. 1(b) is a cross-sectional view illustrating the thin IC tag which is shown in Fig. 1 (a) and which is taken along the line A-A'. As shown in Fig. 1(a), a thin IC tag 20 according to the present invention includes: a flexible sheet 33, winding conductor patterns 34 serving as an antenna coil, an electronic part module 32 on which an IC chip 31 is mounted, and a connecting part 37.

Further, as shown in Fig. 1(b), the thin IC tag 20 is formed as follows. That is, an electronic part holding film is prepared by connecting, to respective ends of the winding conductor patterns 34 provided on the flexible sheet 33, the electronic part module 32 having the IC chip 31. Then, the electronic part holding film thus prepared is folded at a predetermined position such that the electronic part holding film sandwiches an adhesion layer 51. The electronic part holding film thus folded is adhered by the adhesion layer 51.

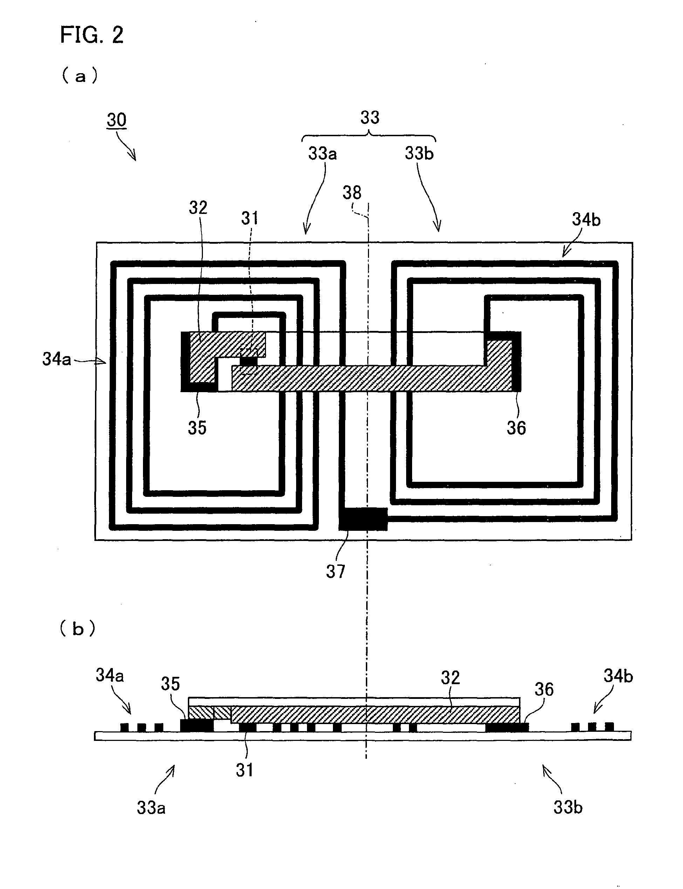

Here, the electronic part holding film is specifically explained with reference to Figs. 2. Fig. 2(a) is an overhead plan view of the electronic part holding film according to the present embodiment, and Fig. 2(b) is a cross-sectional view of the electronic part holding film shown in Fig. 2(a) and taken along the line A-A'.

As shown in Fig. 2(a), the electronic part holding film 30 according to the present embodiment includes the flexible sheet 33, the two winding conductor patterns 34a and 34b, the electronic part module 32, two terminal pads 35 and 36, and the connecting part 37.

The flexible sheet 33 is provided with the two winding conductor patterns 34a and 34b serving as the antenna coil, and is folded at a predetermined folding position 38 in one direction, with the result that the flexible sheet 33 is divided into two sections 33a and 33b having substantially the same size . As described later, the thin IC tag is obtained by folding the electronic part holding film 30 at the folding position 38 such that the electronic part holding film 30 is divided into the two sections 33a and 33b. In the present embodiment, the flexible sheet 33 is a PET (polyethylene terephthalate) film having a thickness of 38 $\mu$m, and each of the two winding conductor patterns 34a and 34b is formed by etching Cu (copper) having a thickness of 9 $\mu$m.

The winding conductor pattern 34a is formed on one surface of the section 33a and the winding conductor pattern 34b is formed on one surface of the section 33b such that the winding conductor patterns 34a and 34b have central points matching each other when the electronic part holding film 30 is folded. Further, the winding conductor patterns 34a and 34b constitute the antenna coil in which the winding conductor patterns 34a and 34b are serially connected to each other via the predetermined connecting part 37 so that a current flows in one direction (winding direction) of the winding conductor patterns 34a and 34b when the electronic part holding film 30 is folded. Further, the connecting part 37 is provided on the folding position 38.

Further, the terminal pad 35 is provided at an end of the winding conductor pattern 34a, which end is not connected to the connection part 37. In other words, the terminal pad 35 is provided at the end which is positioned inside a portion surrounded by the winding conductor pattern 34a. Similarly, the terminal pad 36 is provided at an end of the winding conductor pattern 34b, which end is not connected to the connection part 37. In other words, the terminal pad 36 is provided at the end which is positioned inside a portion surrounded by the winding conductor pattern 34b.

Further, the electronic part module 32 is arranged such that the IC chip 31 is mounted on a circuit board. The present embodiment uses an electronic part module in which a bare chip IC is mounted on a PET film substrate having a thickness of 25 μm. Moreover, the electronic part module 32 electrically connects the terminal pads 35 and 36. That is, the electronic part module 32 is provided on the electronic part holding film 30 so as to bridge across the folding position 38 and the two winding conductor patterns 34a and 34b. Therefore, as described below, the electronic part module 32 is formed so as to be folded at the folding position 38 when the electronic part holding film 30 is folded at the folding position 38.

The electronic part holding film 30 thus folded at the folding position 38 is adhered by the adhesion layer, with the result that the thin IC tag 20 (see Figs. 1) according to the present embodiment is obtained.

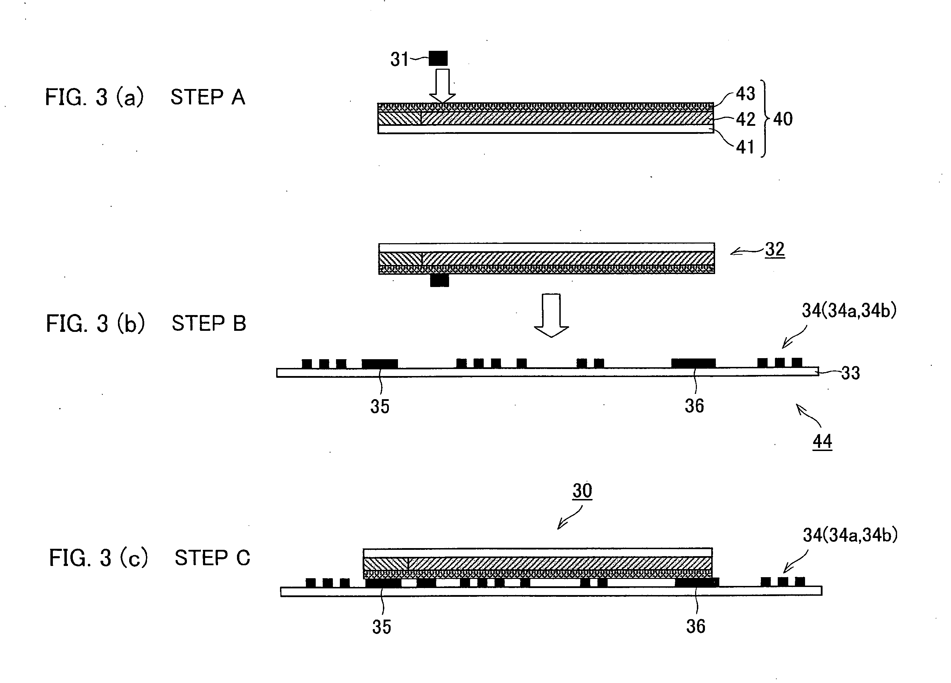

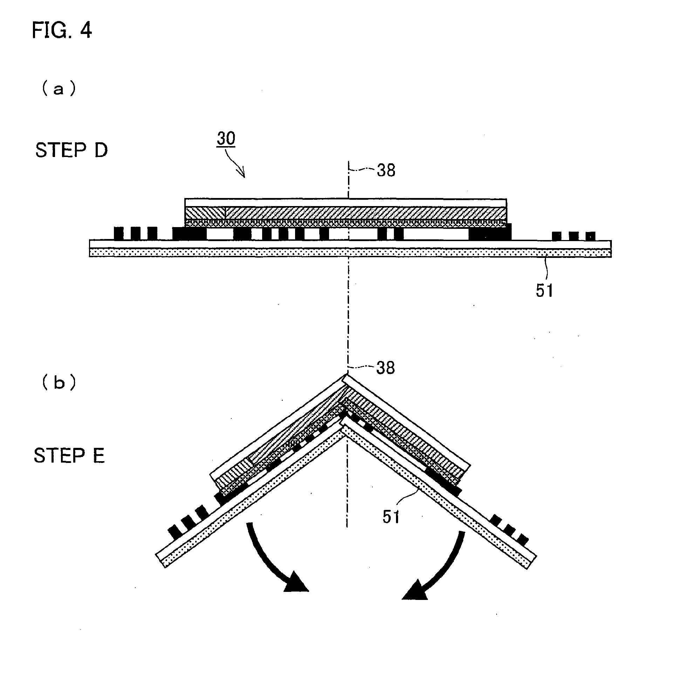

In the following, one example of steps of manufacturing the thin IC tag 20 according to the present embodiment will be described with reference to Figs. 3 (a), 3(b), 3(c), and 4.

Fig. 3(a) is a diagram showing Step A of producing the electronic part module. Fig. 3(b) is a diagram showing Step B of producing the flexible sheet on which the antenna coil is formed. Fig. 3(c) is a diagram illustrating that the electronic part module of Fig. 3(a) is mounted on the flexible sheet.

Step A of producing the electronic part module 32 will be described with reference to Fig. 3(a). First, an A1-PET laminated material is prepared in which aluminum foil 42 having a thickness of 35 μm is bonded onto a PET film 41 having a thickness of 25 μm. The aluminum foil 42 is processed to have a shape corresponding to a required pattern circuit. The processing method used herein is a conventional publicly-known etching method, and an etching resist used herein is a thermoplastic resin film 43 made of polyester and the like. Note that (i) the PET film 41, (ii) the aluminum foil 42 processed to have the shape corresponding to the required pattern circuit, and (iii) the thermoplastic resin film 43 are collectively referred to as a wiring substrate 40.

Next, the IC chip 31 is mounted on the wiring substrate 40 having the aluminum foil 42 processed to have the shape corresponding to the required pattern circuit. This mounting can be carried out by using a manufacturing method disclosed in Japanese Unexamined Patent Publication No. 156110/2001 (Tokukai 2001-156110).

More specifically, in the present embodiment, the IC chip 31 has a thickness of 150 μm, and has a bump which protrudes from the bottom surface of the IC chip 31 and which serves as a metal connection part. That is, the IC chip is a so-called surface-mounted part. First, in a first step, with the bump (made of gold for example) ultrasonically vibrated, the bump is pressed against the thermoplastic resin film 43 melted by a heat of 150˚C. The ultrasonic vibration applied to the bump causes the melted thermoplastic resin film 43 to be pushed away and removed from the position corresponding to the top of the bump. Moreover, the vibration further causes physical removal of an oxide layer and the like from a surface of the aluminum foil wiring pattern. As a result, the bump comes into contact with an electrode region of the wiring pattern. Thereafter, in a second step, vibration is further applied so as to cause frictional heat, with the result that the bump and the electrode region are heated. This causes formation of a metal fusion part in which the gold atoms are diffused in the aluminum foil, thus completing the ultrasonic bonding of the bump with the electrode region.

Specifically, in the first and second steps, the IC chip 31 is set at a predetermined position, and then, for example, the IC chip 31 is ultrasonically vibrated for a few seconds at a vibration frequency of 63 kHz while the IC chip 31 is put under a load pressure of 0.2 kg/mm$^2$. In this way, the first and second steps are completed. The ultrasonic mounting step allows the IC chip 31 to be firmly fixed onto (the aluminum foil circuit pattern 42 of) the wiring substrate 40.

In the following, Step B of producing a flexible sheet 44 on which the antenna coil is formed will be described with reference to Fig. 3(b). First, the flexible sheet 33 is prepared which is a Cu-PET laminated substrate. An example of the flexible sheet 33 is a Cu-PET laminated material in which copper foil having a thickness of 9 μm is bonded to a surface of a PET film having a thickness of 38μ m by using urethane adhesive.

Then, an etching resist pattern having a winding shape (coil-like shape) is formed on a surface of the copper foil of the flexible sheet 33. Specifically, the etching resist pattern is shaped to have a shape corresponding to the two winding conductor patterns 34 (34a, 34b) serving as the antenna coil. In other words, the etching resist pattern is processed such that the two winding conductor patterns 34 (34a, 34b) have the central points matching each other when the electronic part holding film 30 is folded at the folding position 38, and such that the winding conductor patterns 34a and 34b are serially connected to each other via the connecting part 37 so as to allow the current to flow in the direction of the winding conductor patterns 34a and 34b when the electronic part holding film 30 is folded at the folding position 38. The etching resist pattern is formed, for example, by using the gravure printing method.

Next, a conventional publicly-known etching is carried out with respect to a part of the copper foil, i.e.,

a part which is not covered with the etching resist formed in the foregoing step, with the result that the part of the cooper foil is removed. In this way, the winding conductor patterns 34 (34a, 34b) serving as the antenna coil is formed.

In the following, Step C of mounting the electronic part module 32 on the flexible sheet 44 on which the antenna coil is formed will be described with reference to Fig. 3(c). This mounting can also be carried out by using the manufacturing method disclosed in Japanese Unexamined Patent Publication No. 156110/2001 (Tokukai 2001-156110).

That is, the electronic part module 32 is positioned such that both ends of the aluminum foil circuit pattern 42 respectively face the terminal pads 35 and 36. Specifically, the electronic part module 32 is mounted on the flexible sheet 44 on which the antenna coil is formed, in such a manner that (i) the surface of the electronic part module 32 on which the electronic part (IC ship 31) is mounted faces a surface of the flexible sheet 44 on which the winding conductor patterns 34 serving as the antenna coil are formed, and that (ii) the electronic part module 32 bridges across (i.e., crosses) the circulation conductor bundle constituting the winding conductor patterns 34. Next, while the electronic part module 32 is put under a load pressure of 0.2 kg/mm$^2$ so as to be pressed directly on the terminals 35 and 36 the electronic part module 32 is ultrasonically vibrated for approximately 0.5 seconds at a vibration frequency of 40 kHz so as to be bonded to the terminal pads 35 and 36. This allows the electronic part module 32 to be surely mounted on the flexible sheet 44 on which the antenna coil is formed.

In this step, the connection may be attained between the electronic module 32 and each of the terminal pads 35 and 36 by providing an anisotropic conductive paste, a conductive paste, or the like between (i) each of the terminal pads 35 and 36 of the antenna coil and (ii) the aluminum circuit.

By carrying out Steps A to C described above, the electronic part holding film 30 can be manufactured.

In the following, as shown in Fig. 4(a), the adhesion layer 51 is formed on a surface of the electronic part holding film 30 opposite to the surface on which the electronic part module 32 is mounted (Step D). The adhesion layer 51 is formed by either (i) coating a surface of a sheet with a hot-melt adhesive (e.g. Esdine 2050A: manufactured by Sekisui Chemical Co., Ltd.) with the use of a roll coater or the like, or (ii) laminating a double-faced tape (e.g., No531: manufactured by Nitto Denko Corporation), a hot-melt thermocompression sheet, or the like.

Finally, as shown in Fig. 4(b), the electronic part holding film 30 is folded at the predetermined folding position 38, with the result that the thin IC label 20 shown in Figs. 1 is manufactured (Step E). Here, the electronic part holding film 30 is folded in a folding direction corresponding to a direction of the surface on which the adhesion layer 51 is formed. This makes it possible that the electronic part holding film 30 thus folded is fixed by using the adhesion layer 51. Accordingly, the structure of the thin IC tag 20 thus obtained through the folding can be retained.

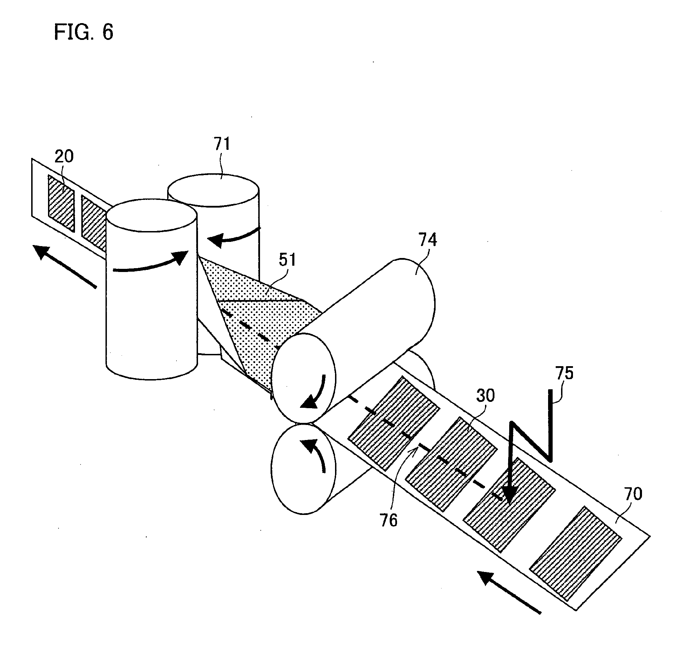

Note that the manufacturing of the thin IC tag 20 can be accelerated by continuously carrying out Steps D and E with the use of an apparatus shown in Fig. 6. That is, a plurality of the electronic part holding films 30 are placed continuously at a certain pitch on a predetermined surface of a continuous sheet 70 . Then, the adhesion layer 51 is formed by applying an adhesive to the surface of the continuous sheet 70 with the use of a roll coater 74 or the like. Thereafter, the continuous sheet 70 passes through a pressure roller 71 so that each of the electronic part holding films 30 is folded at the predetermined folding position 38. In cases where a laser 75 of approximately 2 W to approximately 10 W is projected in advance so as to mark the predetermined folding position 38 with a folding mark (i.e., a cut line such as a perforated line in the present embodiment) 76 for the sake of the folding, a reliable, easy, and stable folding process can be carried out such that the electronic part holding film 30 is never folded at a position other than the predetermined folding position 38.

According to the arrangement of the thin IC tag 20 manufactured by using such a manufacturing method, it is possible to increase the number of windings in each of the winding conductor patterns 34a and 34b serving as the antenna coil. Therefore, a predetermined resonant frequency can be obtained even when the outer dimensions of the antenna coil are reduced. This makes it possible to improve sensitivity in the noncontact reading using an electromagnetic wave (induction field). Furthermore, the terminal pads 35 and 36 respectively formed on the both ends of the antenna coil are electrically connected to each other via the electronic part module 32. This makes it unnecessary to provide a through-hole, a window hole, or the like, and therefore makes it possible to reduce the number of manufacturing steps and the manufacturing cost. Further, the step of mounting the electronic part module 32 on the electronic part holding film 38 can be carried out before folding the electronic part holding film 38. This allows improvement in the mass production of the thin IC tag 20.

[Embodiment 2]

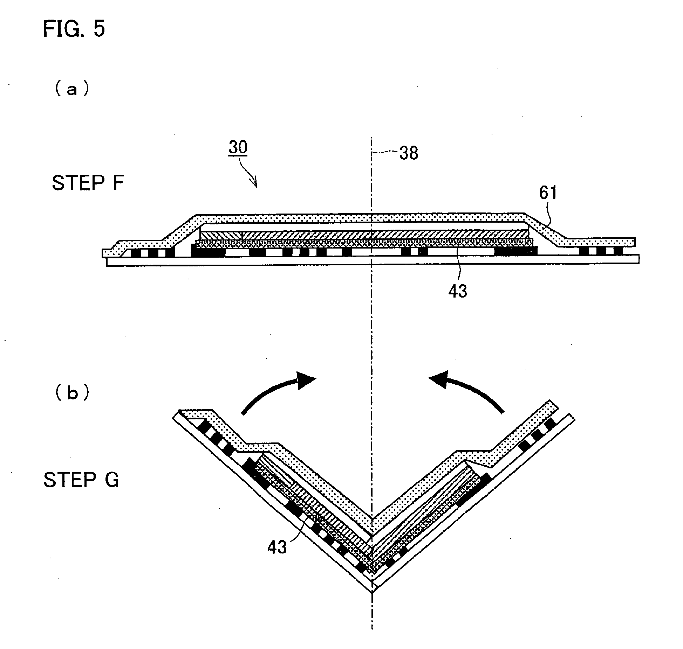

A thin IC tag according to another embodiment of the present invention and a method for manufacturing the thin IC tag will be described below with reference to Figs. 5. For convenience of explanation, components having the same functions as those described in Embodiment 1 are given the same reference numerals, and description of the components is omitted. The present embodiment explains differences between Embodiment 1 and the present embodiment.

The thin IC tag described in Embodiment 1 is arranged as follows. That is, the adhesion layer 51 is formed on the surface of the electronic part holding film 30 opposite to the surface on which the electronic part module 32 is mounted, and the folding direction corresponds to the direction of the surface on which the adhesion layer 51 is formed. On the other hand, the thin IC tag according to the present embodiment is arranged as follows. That is, the adhesion layer 51 is formed on the surface of the electronic part holding film 30 on which the electronic part module 32 is mounted, and the folding direction corresponds to the direction of the surface on which the adhesion layer 51 is formed. The following explains a method for manufacturing the thin IC tag according to the present embodiment.

The method for manufacturing the thin IC tag 20 includes Steps A to C as is the case with Embodiment 1, but includes Steps F and G instead of Steps D and E of Embodiment 1. Steps F and G will be described with reference to Figs. 5.

Fig. 5(a) is a diagram showing Step F, and Fig. 5(b) is a diagram showing Step G. In Step F shown in Fig. 5(a), the adhesion layer 61 is formed by applying an adhesive to the surface of the electronic part holding film 30 on which the electronic part module 32 is mounted. The adhesive used herein and the method for applying the adhesive may be the same as those used in Embodiment 1.

Next, in Step G shown in Fig. 5(b), the thin IC tag 20 is manufactured by folding the electronic part holding film 30 at the predetermined folding position 38. The folding direction corresponds to a direction opposite to that of Embodiment 1, i.e., corresponds to a direction of the surface on which the adhesion layer 61 is formed.

The thin IC tag 20 according to the present embodiment is arranged such that the electronic part module 32 is covered with the flexible sheet 44 on which the antenna coil is formed. This is advantageous in that the electronic part module 32 on which the electronic part such as the IC chip is mounted can be protected from the external environment.

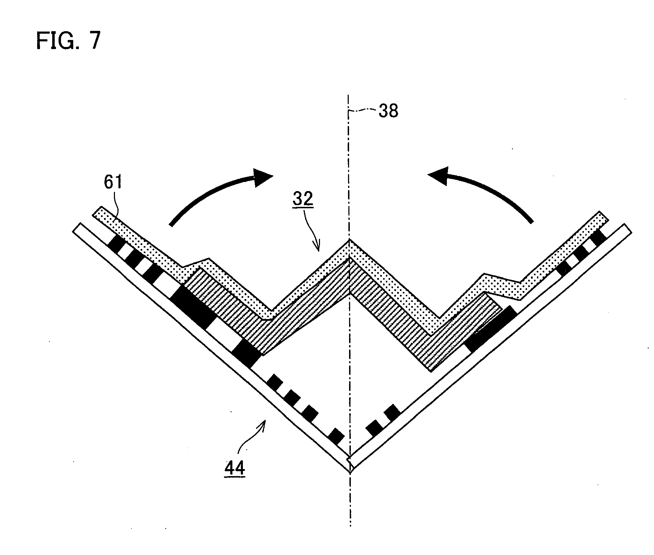

However, in cases where the adhesion layer 61 is thus formed on the surface of the electronic part holding film 30 on which the electronic part module 32 is mounted and the folding direction corresponds to the direction of the surface on which the adhesion layer 61 is formed, the folding step may cause the electronic part module 32 to be deformed as shown in Fig. 7. Accordingly, the folding process may not be carried out satisfactorily. Such a problem is likely to occur in cases where the electronic part module 32 is not attached firmly to the flexible sheet 44 on which the antenna coil is formed.

For the sake of avoiding the problem, the folding process is carried out in the present embodiment after the electronic part module 32 and the flexible sheet 44 on which the antenna coil is formed are fixed (bonded) to each other by making use of the bonding characteristic of the thermoplastic resin film 43 as is the case with the production of the electronic part module 32. That is, after the electronic part holding film 30 is formed by providing the electronic part module 32 on the flexible sheet 44 on which the antenna coil is formed, the step of bonding the electronic part module 32 to the flexible sheet 44 on which the antenna coil is formed is carried out. Thereafter, the adhesion layer 61 is formed on at least one surface of the electronic part holding film 30, and the electronic part holding film 30 on which the adhesion layer 61 is formed is folded. In this way, the thin IC tag according to the present embodiment can be manufactured.

Note that the "step of, after forming the electronic part holding film 30 by providing the electronic part module 32, bonding the electronic part module 32 to the flexible sheet 44 on which the antenna coil is formed" can be easily carried out by allowing the electronic part holding film 30 to pass through a roll heated to approximately 150°C.

As described above, a thin IC tag according to the present invention is arranged as follows. That is, the electronic part is provided on a circuit board, and is provided in the electronic part holding film as an electronic part module. The sections of the electronic part holding film respectively have winding conductor patterns each formed on at least one surface of each of the sections such that respective centers of the winding conductor patterns match each other when the electronic part holding film is folded. The winding conductor patterns respectively formed on the sections constitute the antenna coil in which the winding conductor patterns are serially connected to each other via a predetermined connecting part so that a current flows in one winding direction when the electronic part holding film is folded. The winding conductor patterns provided in the sections have ends in which terminal pads are formed and to which the predetermined connecting part is not connected, respectively. The terminal pads of the winding conductor patterns whose centers match each other when the electronic part holding film is folded are electrically connected to each other via the electronic part module. This makes it possible to increase the number of turns in the antenna coil, and therefore brings about such an effect that a predetermined resonant frequency is obtained even when the outer dimensions of the antenna coil are reduced. This makes it possible to improve sensitivity in the noncontact reading using an electromagnetic wave (induction field). Furthermore, the two terminal pads respectively formed on the both ends of the antenna coil are connected to each other via the electronic part module. This makes it unnecessary to provide a through-hole, a window hole, or the like, and therefore brings about an effect of reducing the number of manufacturing steps and the manufacturing cost. Further, the electronic part module on which the electronic part such as an IC ship is mounted can be mounted before the folding process. This brings about an effect of allowing improvement in the mass production of the thin IC tag.

Further, the present invention may relate to a method for manufacturing a thin IC chip, the method including the steps of (i) forming an electronic part holding film including (a) a flexible sheet holding an antenna coil and (b) an electronic part module in which an electronic part such as an IC is mounted on a circuit board, and then (ii) folding the flexible film. The present invention may include a thin IC label arranged such that: the electronic part module connected to two terminal pads respectively provided inside portions surrounded by the antenna coil is provided on a folding position; and the electronic part holding film is folded such that the electronic part module is folded.

Further, the present invention may include a method for manufacturing the thin IC label, the method including: a first step of forming an adhesion layer on at least one surface of an electronic part holding film including (i) an antenna coil and (ii) an electronic part module in which an electronic part such as an IC are mounted on a circuit board; and a second step of folding the electronic part holding film after the first step.

Further, the method may further include the step of bonding the electronic part module to a surface of a film material holding the antenna coil, the step being carried out before the step of folding the electronic part holding film.

Further, the method may further include the step of making a cut line in the folding position by using a laser, the step being carried out before the step of folding the electronic part holding film.

Further, the thin IC tag according to the present invention is preferably arranged such that: the electronic part module is provided on the electronic part holding film so as to bridge across a circulation conductor bundle which constitutes the winding conductor patterns whose centers match each other when the electronic part holding film is folded; and the electronic part module is formed so as to be folded when the electronic part holding film is folded.

According to the foregoing arrangement, the terminal pads can be surely connected to each other via the electronic part module. Further, the electronic part module can be easily mounted before the folding step. This improves mass productivity in manufacturing.

Further, the thin IC tag according to the present invention is preferably arranged such that the terminal pads are provided inside portions surrounded by the winding conductor patterns provided in the sections, respectively.

Further, the method according to the present invention preferably includes the step of forming, in a folding position at which the electronic part holding film is folded, a folding mark for allowing the electronic part holding film to be folded easily, the step being carried out before the step of folding the electronic part holding film.

According to the foregoing method, the electronic part holding film can be surely and easily folded. The shape, size, and the like of the "folding mark" are not limited as long as it allows the electronic part holding film to be folded easily. However, as described below, examples of the "folding mark" include a perforated line.

That is, the method according to the present invention is preferably arranged such that the step of forming the folding mark includes the step of making a cut line by using a laser.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

INDUSTRIAL APPLICABILITY

As described above, according to a thin IC tag according to the present invention and a method for manufacturing the thin IC tag, it is possible that the thin IC tag is used, for example, as a slip-embedded type IC label that can be read in a noncontact manner by using an induction field. For example, the thin IC tag is possibly used as a data carrier which serves as a flight baggage claim tag, a label for distribution management, an electromagnetically readable pass for an automated ticket gate.

**Claims**

1. A thin IC tag, comprising:

a product obtained by (i) forming an electronic part holding film by mounting an electronic part on a flexible sheet on which an antenna coil is formed, and then (ii) folding the electronic part holding film in one direction such that the electronic part holding film is divided into sections having substantially an identical size, the electronic part being provided on a circuit board, being provided in the electronic part holding film as an electronic part module, the sections of the electronic part holding film respectively having winding conductor patterns each formed on at least one surface of each of the sections such that respective centers of the winding conductor patterns match each other when the electronic part holding film is folded, the winding conductor patterns respectively formed on the sections constituting the antenna coil in which the winding conductor patterns are serially connected to each other via a predetermined connecting part so that a current flows in one winding direction when the electronic part holding film is folded, the winding conductor patterns provided in the sections having ends in which terminal pads are formed and to which the predetermined connecting part is not connected, respectively, the terminal pads of the winding conductor patterns whose centers match each other when the electronic part holding film is folded being electrically connected to each other via the electronic part module.

2. The thin IC tag as set forth in claim 1, wherein:

the electronic part module is provided on the electronic part holding film so as to bridge across a circulation conductor bundle which constitutes the winding conductor patterns whose centers match each other when the electronic part holding film is folded; and
the electronic part module is formed so as to be folded when the electronic part holding film is folded.

3. The thin IC tag as set forth in claim 1, wherein the terminal pads are provided inside portions surrounded by the winding conductor patterns provided in the sections, respectively.

4. A method for manufacturing the thin IC tag as set forth in claim 1, the method comprising:

a first step of forming an electronic part holding film by providing, on (i) a flexible sheet on which an antenna coil is formed, (ii) an electronic part module in which an electronic part is mounted on a circuit board;
a second step of forming an adhesion layer on at least one surface of the electronic part holding film; and
a third step of folding the electronic part holding film on which the adhesion layer has been formed in the second step.

5. A method for manufacturing the thin IC tag as set forth in claim 1, the method comprising:

a first step of forming an electronic part holding film by providing, on (i) a flexible sheet on which an antenna coil is formed, (ii) an electronic part module in which an electronic part is mounted on a circuit board;
a second step of bonding the electronic part module to the flexible sheet on which the antenna coil is formed;
a third step of forming an adhesion layer on at least one surface of the electronic part holding film; and
a fourth step of folding the electronic part holding film on which the adhesion layer has been formed in the third step.

6. The method as set forth in claim 4 or 5, further comprising the step of forming, at a folding position at which the electronic part holding film is folded, a folding mark allowing the electronic part holding film to be folded easily, the step being carried out before the step of folding the electronic part holding film.

7. The method as set forth in claim 6, wherein the step of forming the folding mark includes the step of making a cut line by using a laser.

FIG. 1 (a)

20

34

33

A ──── A'

31

32

37

FIG. 1 (b)

34

33

31

51

32

34

FIG. 2

(a)

(b)

EP 1 755 069 A1

FIG. 3 (a) STEP A

31

43
42 } 40
41

FIG. 3 (b) STEP B

32

34(34a,34b)

33

35    36

44

30

FIG. 3 (c) STEP C

34(34a,34b)

35    36

FIG. 4

（a）

STEP D

30

-- 38

51

（b）

-- 38

STEP E

51

FIG. 5

(a)

STEP F

30    ---38

61

43

(b)

STEP G

43

FIG. 6

FIG. 7

FIG. 8

(A)

(B)

EP 1 755 069 A1

<table>
<tr><td colspan="2">**INTERNATIONAL SEARCH REPORT**</td><td>International application No.<br>PCT/JP2005/004472</td></tr>
</table>

A.  CLASSIFICATION OF SUBJECT MATTER
  Int.Cl⁷  G06K19/077, B42D15/10, G06K19/07, H01Q7/02

According to International Patent Classification (IPC) or to both national classification and IPC

B.  FIELDS SEARCHED

Minimum documentation searched (classification system followed by classification symbols)
  Int.Cl⁷  G06K19/077, B42D15/10, G06K19/07, H01Q7/02

Documentation searched other than minimum documentation to the extent that such documents are included in the fields searched
  Jitsuyo Shinan Koho          1922-1996    Jitsuyo Shinan Toroku Koho    1996-2005
  Kokai Jitsuyo Shinan Koho    1971-2005    Toroku Jitsuyo Shinan Koho    1994-2005

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 2002-366917 A  (Hitachi, Ltd.),<br>20 December, 2002 (20.12.02),<br>Par. Nos. [0016] to [0020]; Figs. 5, 6<br>(Family: none) | 1,3-5<br>6,7 |
| X<br>Y | JP 2003-022912 A  (Mitsubishi Materials Corp.),<br>24 January, 2003 (24.01.03),<br>Par. Nos. [0025] to [0030]; Figs. 6 to 10<br>(Family: none) | 1-5<br>6,7 |
| Y | JP 07-335443 A  (Hitachi Maxell, Ltd.),<br>22 December, 1995 (22.12.95),<br>Figs. 1, 7<br>(Family: none) | 6,7 |

☐  Further documents are listed in the continuation of Box C.          ☐  See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| | |
|---|---|
| Date of the actual completion of the international search<br>  08 June, 2005 (08.06.05) | Date of mailing of the international search report<br>  28 June, 2005 (28.06.05) |
| Name and mailing address of the ISA/<br>  Japanese Patent Office | Authorized officer |
| Facsimile No. | Telephone No. |

Form PCT/ISA/210 (second sheet) (January 2004)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10200231 A
- JP 11134459 A
- JP 2001156110 A